# FASCICULE DE BREVET EUROPEEN

(11) **EP 2 602 910 B1**
(45) Date de publication et mention de la délivrance du brevet: **16.07.2014**
(21) Numéro de dépôt: 12195222.0
(22) Date de dépôt: 03.12.2012
(51) Int. Cl.: H02J 9/06, H02M 3/335, B64D 41/00

(54) **Dispositif interface entre un réseau électrique et des systèmes consommateurs**
Schnittstellenvorrichtung zwischen einem elektrischen Netz und Verbrauchersystemen
Interface device between an electricity grid and consumer systems

(30) Priorité: 05.12.2011 FR 1161153
(43) Date de publication de la demande: 12.06.2013
(73) Titulaire: Airbus Operations (Société par actions simplifiée), 31060 Toulouse (FR)
(72) Inventeur: Rieux-Lopez, Olivier, 81310 Lisle sur Tarn (FR); Plat, Arnaud, 32600 Segoufielle (FR)
(74) Mandataire: Ilgart, Jean-Christophe

(56) Documents cités:
- EP-A2- 0 706 256
- FR-A1- 2 895 167
- JP-A- 11 089 113
- JAIN M ET AL: "A high frequency triport topology for low power DC UPS", POWER ELECTRONICS SPECIALISTS CONFERENCE, 1998. PESC 98 RECORD. 29TH A NNUAL IEEE FUKUOKA, JAPAN 17-22 MAY 1998, NEW YORK, NY, USA,IEEE, US, vol. 2, 17 mai 1998 (1998-05-17), pages 1796-1802, XP010294832, DOI: 10.1109/PESC.1998.703425 ISBN: 978-0-7803-4489-1

## Description

### DOMAINE TECHNIQUE

L'invention concerne un dispositif interface entre un réseau électrique et des systèmes consommateurs d'énergie électrique, notamment à bord d'un aéronef, par exemple un avion.

### ÉTAT DE LA TECHNIQUE ANTÉRIEURE

Les systèmes électroniques actuels nécessitent un dispositif interface entre un réseau électrique et différents systèmes consommateurs qui réalisent des fonctionnalités qui leurs sont demandées. Ce dispositif interface permet d'adapter une tension délivrée par un réseau électrique continu ou par extension résultant du redressement d'une tension alternative issue d'un réseau électrique alternatif, aux différents systèmes consommateurs mais aussi de les affranchir des perturbations auxquelles est soumis le réseau électrique. Ces perturbations peuvent être des microcoupures d'alimentation réseau ou une tension d'alimentation inférieure à un seuil. En deçà de ce seuil le dispositif interface ne fonctionne plus de manière satisfaisante. Dans la suite de la description, on emploiera le terme de microcoupure mais cela englobe également une tension d'alimentation réseau inférieure au seuil.

Une fonction réserve d'énergie, par exemple un condensateur, permet de stocker de l'énergie électrique et de réaliser une protection contre des microcoupures. Une fonction isolation galvanique permet d'empêcher la circulation de courant entre deux circuits électriques électriquement connectés l'un à l'autre.

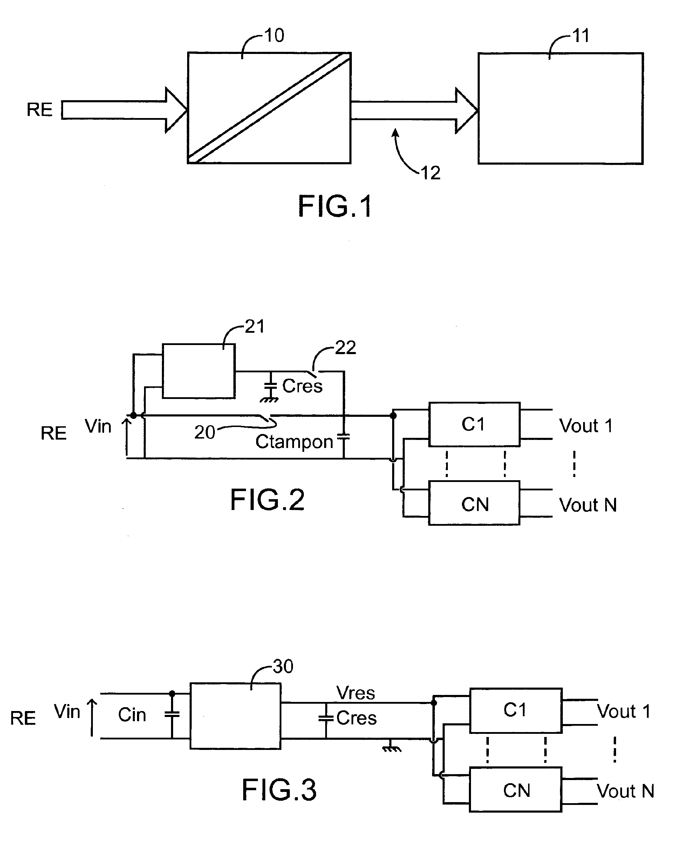

La figure 1 illustre un schéma de principe qui situe un dispositif interface 10 entre un réseau électrique continu RE et un système consommateur 11. On obtient ainsi en sortie du dispositif interface 10 un réseau électrique 12 adapté, isolé et protégé contre les microcoupures. Les principales solutions existantes en termes d'architecture pour réaliser un tel dispositif interface sont les suivantes :
- utilisation de deux étages convertisseurs : le premier pour réaliser une fonction isolation galvanique et le second pour réaliser la gestion d'une fonction réserve d'énergie ;
- utilisation d'un étage convertisseur qui permet de réaliser la gestion d'une fonction réserve d'énergie et éventuellement une fonction isolation galvanique.

Dans une première solution, on utilise deux étages convertisseurs pour obtenir une tension de sortie régulée et une réserve d'énergie. Une topologie existante est connue du document FR-A-2 895 167 et est illustrée sur la figure 2. Cette figure 2 montre plusieurs convertisseurs de sortie continu-continu C1 à CN, par exemple de type « Buck », soit en français « abaisseur ». Dans la suite de la description, le terme « plusieurs » signifie au moins deux. Un convertisseur de type « Buck », encore appelé hacheur série, est une alimentation à découpage qui convertit une tension continue en une autre tension continue de plus faible valeur. En variante, ces convertisseurs de sortie C1 à CN pourraient être des convertisseurs de type « Boost », soit en français « élévateur ». Un convertisseur de type « Boost », encore appelé hacheur parallèle, est une alimentation à découpage qui convertit une tension continue en une autre tension continue de plus forte valeur.

Chaque convertisseur de sortie C1 à CN a deux entrées, ces deux entrées sont destinées à être reliées à un réseau électrique RE, pour l'une d'entre elles la liaison se faisant au travers d'un premier interrupteur 20. Un condensateur Ctampon est branché entre les deux entrées des convertisseurs de sortie C1 à CN. Ces convertisseurs C1 à CN délivrent des tensions de sortie régulées Vout1 à VoutN.

Il y a également un convertisseur d'entrée de type « Boost » 21 ayant deux entrées reliées au réseau électrique RE et une sortie reliée à une entrée de chacun des convertisseurs de sortie C1 à CN au travers d'un second interrupteur 22, cette sortie étant également reliée à une borne d'une réserve d'énergie Cres dont l'autre borne est reliée à une masse. Le convertisseur d'entrée 21 permet de charger la réserve d'énergie Cres à une tension supérieure de celle délivrée par le réseau électrique RE. La tension délivrée par le réseau électrique RE est appelée Vin.

Les convertisseurs de sortie C1 à CN permettent de réaliser une isolation galvanique entre le réseau électrique RE et les tensions de sortie Vout1 à VoutN. Ils doivent s'adapter aux variations de la tension Vin du réseau électrique RE et à celles de la tension Vres aux bornes de la réserve d'énergie Cres. Afin de choisir la source d'alimentation des convertisseurs de sortie C1 à CN qui réalisent l'isolation galvanique, il est nécessaire de mettre en place le premier et le second interrupteur 20 et 22.

Le premier interrupteur 20 permet de déconnecter les convertisseurs de sortie C1 à CN du réseau électrique RE et le second interrupteur 22 permet de connecter la réserve d'énergie Cres en entrée des convertisseurs de sortie C1 à CN. Ces interrupteurs 20 et 21 travaillent en opposition. Lorsque le premier interrupteur 20 est fermé, les convertisseurs de sortie C1 à CN sont alimentés directement par le réseau électrique RE. Lorsque le second interrupteur 22 est fermé, les convertisseurs de sortie C1 à CN sont alimentés par de l'énergie électrique stockée préalablement dans la réserve d'énergie Cres.

Le condensateur Ctampon a pour objet de garantir l'existence d'une tension en entrée des convertisseurs de sortie C1 à CN pendant des phases de transition. En effet, il n'est pas possible de piloter les deux interrupteurs 20 et 22 de manière rigoureusement synchrone. Ces deux interrupteurs 20, 22 restent donc ouverts en même temps environ 1µs. Le condensateur Ctampon dont la valeur est beaucoup plus faible que celle de la réserve d'énergie Cres, permet d'alimenter les convertisseurs de sortie C1 à CN pendant quelques millisecondes.

Cette première solution présente les avantages suivants :
- Elle est simple, elle comprend deux étages convertisseurs séparés.
- Elle permet de trouver un compromis intéressant entre la tension aux bornes de la réserve d'énergie Cres et le volume qu'elle occupe.
- Le temps d'établissement de la tension de sortie Vout1 à VoutN des convertisseurs de sortie C1 à CN ne dépend pas de la charge de la réserve d'énergie Cres.
- Le convertisseur d'entrée 21 est dimensionné pour fournir uniquement la puissance nécessaire à la charge de la réserve d'énergie Cres.

Par contre, cette première solution présente les inconvénients suivants :
- Elle est encombrante. Elle comprend, en effet, n + 1 convertisseurs.
- Il est impossible de gérer l'appel de courant au démarrage du fait de la structure du convertisseur d'entrée 21.
- La tension d'entrée des convertisseurs de sortie C1 à CN, qui réalisent l'isolation galvanique, est éventuellement supérieure à la variation de la tension d'entrée Vin du réseau électrique RE.
- Les pertes pendant les commutations de l'interrupteur 22 sont importantes, elles sont proportionnelles à la capacité du condensateur Ctampon et l'interrupteur 22 est fortement sollicité pendant ces phases.

Dans une seconde solution, on utilise un convertisseur pour obtenir une tension régulée. Une topologie très utilisée est illustrée sur la figure 3. Sur cette figure, un convertisseur d'entrée de type « forward » ou « flyback » 30 a deux entrées reliées au réseau électrique RE et deux sorties reliées en entrée de chacun des convertisseurs de sortie C1 à CN. Le convertisseur de type « forward » est aussi connu sous la dénomination de convertisseur direct en français. Le convertisseur de type « flyback » est aussi connu sous la dénomination de convertisseur à accumulation en français.

Les convertisseurs de sortie C1 à CN sont de même nature que dans l'exemple précédent. La réserve d'énergie Cres est reliée entre les deux sorties du convertisseur d'entrée 30. Le convertisseur d'entrée 30 permet de réguler la tension aux bornes de la réserve d'énergie Cres et peut éventuellement réaliser l'isolation galvanique. La réserve d'énergie Cres est placée en sortie de ce convertisseur d'entrée 30 en nécessitant un volume capacitif important de manière à ce que l'on garantisse une tension Vres minimum, aux bornes de la réserve d'énergie Cres, pendant une microcoupure. Pendant une phase de microcoupure sur le réseau électrique RE, le convertisseur d'entrée 30 n'est plus fonctionnel. La puissance de sortie est fournie par la réserve d'énergie Cres qui se décharge. Un condensateur Cin de filtrage et de découplage est connecté aux bornes des entrées du convertisseur d'entrée 30.

Cette seconde solution présente les avantages suivants :
- Elle est simple. Elle comprend en effet un seul convertisseur d'entrée 30 ayant une plage fonctionnement sur la tension d'entrée égale à la dynamique du réseau électrique.

Par contre, cette seconde solution présente les inconvénients suivants :
- Le temps de démarrage est plus important que dans la première solution car il faut que la réserve d'énergie Cres soit chargée pour que l'interface soit fonctionnelle.
- Le convertisseur d'entrée 30 doit être dimensionné pour garantir la puissance de sortie mais aussi la charge de la réserve d'énergie Cres dans le temps imparti.
- En régime permanent, la totalité de la puissance fournie aux systèmes consommateurs d'énergie occasionne des pertes dans tous les convertisseurs 30 et C1 à CN.

En conclusion, dans les deux solutions, il y a le même nombre de convertisseurs, dans la première solution, le convertisseur d'entrée 21 n'assure pas l'isolation galvanique et dans la deuxième solution le convertisseur d'entrée 30 peut assurer l'isolation galvanique.

### EXPOSÉ DE L'INVENTION

La présente invention a pour but de proposer un dispositif interface entre un réseau électrique et plusieurs systèmes consommateurs d'énergie qui ne présente pas les inconvénients évoqués précédemment.

Plus particulièrement, un but de l'invention est de proposer un dispositif interface entre un réseau électrique et plusieurs systèmes consommateurs d'énergie qui permette de réaliser à la fois les fonctions d'isolation galvanique et de protection des systèmes consommateurs contre des microcoupures d'alimentation réseau ou la présence d'une tension d'alimentation inférieure à un seuil. Si la tension d'alimentation réseau est inférieure au seuil, les systèmes consommateurs d'énergie ne peuvent fonctionner de manière satisfaisante.

Un autre but de l'invention est de proposer un dispositif interface entre un réseau électrique et plusieurs systèmes consommateurs d'énergie ayant un volume limité.

Pour y parvenir, la présente invention concerne un dispositif interface entre un réseau électrique continu ou alternatif redressé et des systèmes consommateurs d'énergie, comportant un convertisseur d'entrée continu-continu à relier en entrée du réseau et plusieurs convertisseurs de sortie continu-continu à relier en sortie aux systèmes consommateurs d'énergie. Le convertisseur d'entrée comporte plusieurs enroulements magnétiquement couplés, disposés autour d'un même noyau magnétique, parmi lesquels :
- un premier enroulement connecté en un ensemble série d'un côté avec un module anti-retour et de l'autre avec un premier semi-conducteur de découpage, l'ensemble série ayant deux extrémités à connecter au réseau ;
- un second et un troisième enroulement ayant chacun une première extrémité reliée à une première entrée des convertisseurs de sortie, au travers, respectivement, d'un premier et d'un second module anti-retour, et une seconde extrémité reliée à une seconde entrée des convertisseurs de sortie, au travers, pour le troisième enroulement, d'une cellule d'interruption, cette cellule étant commandée par un signal complémentaire à un signal traduisant un bon fonctionnement du réseau ;
- un quatrième enroulement ayant une extrémité à relier au réseau, au travers d'un second semi-conducteur de découpage.

Le dispositif interface comporte, en outre :
- un condensateur tampon ayant une première extrémité reliée aux premières entrées des convertisseurs de sortie et une seconde extrémité portée à une tension de référence isolée du réseau ;
- une réserve d'énergie ayant une extrémité à relier au réseau et une seconde extrémité reliée à l'autre extrémité du quatrième enroulement.

Le convertisseur d'entrée comporte, en outre :
- un module de commande relié en entrée à la première extrémité du condensateur tampon et en sortie au premier et au second semi-conducteur de découpage de manière à les piloter, ce module de commande assurant une isolation galvanique des convertisseurs de sortie vis-à-vis du réseau.

Le convertisseur d'entrée peut comprendre une autre cellule d'interruption montée entre la seconde extrémité du second enroulement et les secondes entrées des convertisseurs de sortie et pilotée par le signal traduisant le bon fonctionnement du réseau.

Avantageusement, chaque semi-conducteur de découpage et chaque cellule d'interruption peuvent comprendre un composant MOSFET.

De préférence, le module de commande comporte : une boucle d'asservissement, un contrôleur PWM, un étage de commande, une porte OU à diodes, la boucle d'asservissement étant montée entre la première borne du condensateur tampon et une entrée du contrôleur PWM, une sortie du contrôleur PWM étant reliée en entrée de l'étage de commande recevant également en entrée le signal traduisant le bon fonctionnement du réseau, cet étage de commande étant relié en sortie aux premier et second semi-conducteurs de découpage, la porte OU à diodes ayant une première entrée reliée à au premier semi-conducteur de découpage une seconde entrée reliée au second semi-conducteur de découpage et une sortie reliée à une autre entrée du contrôleur PWM.

La boucle d'asservissement peut comporter, en cascade, un étage de régulation et un étage d'isolation galvanique, l'étage de régulation étant relié au condensateur tampon et l'étage d'isolation galvanique étant relié au contrôleur PWM.

L'étage de commande peut comporter :
- deux portes ET recevant respectivement le signal traduisant le bon fonctionnement du réseau et son signal complémentaire et un signal PWM délivré par le contrôleur PWM, le signal complémentaire étant délivré en sortie d'un inverseur recevant en entrée le signal traduisant le bon fonctionnement du réseau.

Le convertisseur d'entrée peut comporter, en outre, un premier module de mesure de courant monté entre le premier semi-conducteur de découpage et le réseau et un second module de mesure de courant monté entre le second semi-conducteur de découpage et le réseau.

Le convertisseur d'entrée est un convertisseur « flyback ».

La réserve d'énergie comprend avantageusement au moins un condensateur.

Une diode Zener peut être disposée aux bornes de la réserve d'énergie pour la protéger.

Le premier module anti-retour peut comporter une diode, ou bien un module de commande associé à un ou plusieurs transistors, un interrupteur, un relais mécanique ou tout autre élément interrupteur unidirectionnel en courant.

La présente invention concerne également un aéronef équipé d'au moins un dispositif interface ainsi caractérisé.

### BRÈVE DESCRIPTION DES DESSINS

- La figure 1 illustre le schéma de principe d'un dispositif interface entre un réseau électrique et des systèmes consommateurs ;
- Les figures 2 et 3 illustrent deux solutions de l'art antérieur ;
- La figure 4 illustre un schéma de principe du dispositif de l'invention ;
- Les figures 5 et 6 illustrent le schéma équivalent du dispositif de l'invention, dans deux modes de fonctionnement différents.

### EXPOSÉ DÉTAILLÉ DE MODES DE RÉALISATION PARTICULIERS

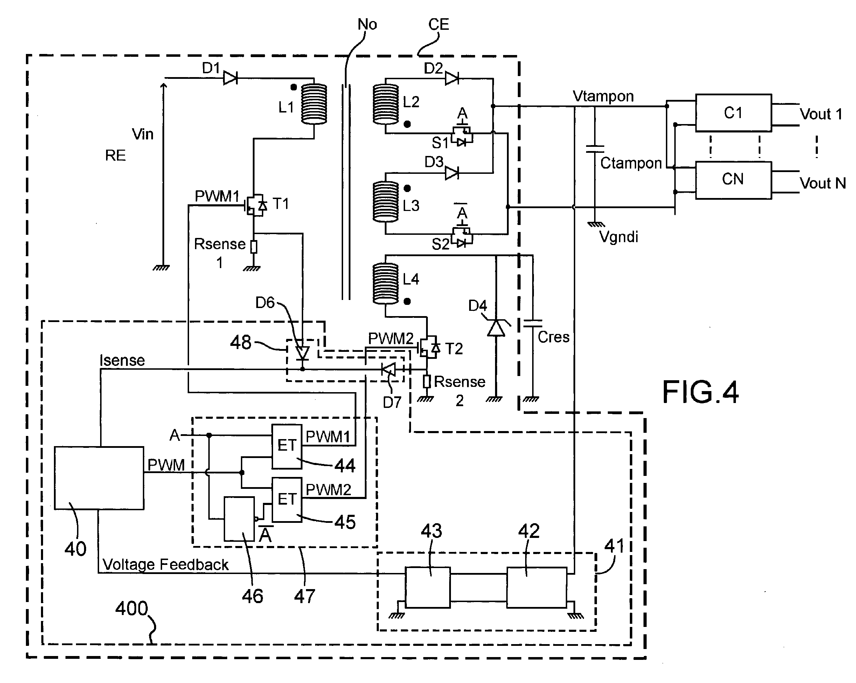

On se réfère à la figure 4.

Le dispositif interface entre un réseau électrique continu ou alternatif redressé RE et des systèmes consommateurs d'énergie (non représentés) selon l'invention comprend un convertisseur d'entrée CE continu-continu comprenant plusieurs enroulements L1, L2, L3, L4 magnétiquement couplés disposés autour d'un même noyau magnétique No. Le dispositif interface comprend également plusieurs convertisseurs de sortie continu-continu C1 à CN ayant des sorties à relier aux systèmes consommateurs d'énergie et coopérant avec le convertisseur d'entrée CE. Comme illustré sur la figure 4, parmi les enroulements du convertisseur d'entrée CE, on distingue :
- un premier enroulement L1 connecté en un ensemble série avec un premier module anti-retour D1, schématisé sur cette figure 4 par une diode, et un premier semi-conducteur de découpage T1. En fonctionnement, l'ensemble série est connecté au réseau RE, entre une première borne et une seconde borne du réseau RE. Entre ces bornes du réseau s'établit une tension Vin.

Le premier module anti-retour D1 est connecté à une extrémité du premier enroulement L1 et le premier semi-conducteur de découpage T1 est connecté à l'autre extrémité du premier enroulement L1. Un premier module de mesure de courant Rsense 1 mesurant un courant circulant dans le premier enroulement L1 prenant la forme d'une résistance série peut être monté entre le premier semi-conducteur de découpage T1 et la borne associée du réseau. Dans l'exemple décrit, le premier module anti-retour D1 est relié à la première borne de réseau RE et le module de mesure de courant Rsense1 est relié à la seconde borne du réseau RE.
- un second et un troisième enroulement L2 et L3 ayant chacun une première extrémité reliée à des premières entrées des N convertisseurs de sortie C1 à CN au travers, respectivement d'une seconde et d'une troisième module anti-retour D2 et D3, ces modules anti-retour étant schématisés par des diodes. La seconde extrémité des second et troisième enroulements L2 et L3 est reliée à des secondes entrées des convertisseurs de sortie C1 à CN au travers respectivement d'une première et d'une seconde cellule d'interruption S1 et S2, ces deux cellules d'interruption S1 et S2 étant pilotées par des signaux complémentaires A et A. A est un signal traduisant un bon fonctionnement du réseau électrique RE. Le bon fonctionnement du réseau électrique signifie que la tension d'entrée Vin est dans une plage de fonctionnement nominal, le réseau fonctionnant de manière normale sans défaut. La tension d'entrée Vin est supérieure ou égale à un seuil en dessous duquel le réseau RE est en défaut. Ce défaut peut être une microcoupure d'alimentation réseau. La première cellule d'interruption peut être omise.
- un quatrième enroulement L4 ayant une première extrémité reliée à première extrémité d'une réserve d'énergie Cres et une seconde extrémité reliée au réseau électrique RE, au niveau de la seconde borne, à travers un second semi-conducteur de découpage T2.

Un second module de mesure de courant Rsense2 mesurant un courant circulant dans le quatrième enroulement L4 prenant la forme d'une résistance série peut être monté entre le second semi-conducteur de découpage T1 et la seconde borne du réseau RE. L'autre extrémité de la réserve d'énergie Cres est reliée à la seconde borne du réseau RE.

Dans une variante de réalisation, les second et troisième enroulements L2 et L3 peuvent être remplacés par un seul enroulement associé à des circuits d'inversion de phase.

Avantageusement, le convertisseur d'entrée avec ses enroulements L1, L2, L3 et L4 forme un convertisseur « flyback ».

Le dispositif interface comporte, en outre, un condensateur tampon Ctampon ayant une première extrémité reliée à une tension de référence Vgndi isolée du réseau RE, et une seconde extrémité reliée aux secondes entrées des N convertisseurs de sortie C1 à CN. Ce condensateur tampon Ctampon est utilisé lors de phases de transition entre une phase d'alimentation des convertisseurs de sortie C1 à CN par le réseau RE et une phase d'alimentation des convertisseurs de sortie C1 à CN par de l'énergie stockée dans la réserve d'énergie Cres et vice versa.

Dans l'exemple de réalisation illustré sur la figure 4, les semi-conducteurs de découpage T1 et T2 et les cellules d'interruption S1 et S2 peuvent être formés chacun d'un composant MOSFET.

Le premier module anti-retour D1 permet de déconnecter l'alimentation du réseau RE pendant une microcoupure et empêche une puissance provenant de la réserve d'énergie Cres d'atteindre le réseau RE.

Les modules anti-retour D2, D3 empêchent une puissance provenant du condensateur tampon Ctampon d'atteindre le réseau RE.

En variante, le premier module anti-retour D1 pourrait être formé par un ou plusieurs transistors, un interrupteur, un relais mécanique ou tout autre élément interrupteur unidirectionnel en courant et un module de commande pour les commander. Ces éléments ne sont pas illustrés pour ne pas multiplier inutilement le nombre de figures.

La réserve d'énergie comprend au moins un condensateur Cres. Une diode Zener D4 peut être disposée aux bornes de la réserve d'énergie Cres pour la protéger.

Le convertisseur d'entrée comporte, en outre, un module de commande 400 qui reçoit la tension aux bornes du condensateur tampon Ctampon et qui pilote les premier et second semi-conducteurs de découpage T1 et T2. Le module de commande 400 est relié en entrée à la première extrémité du condensateur tampon Ctampon et en sortie au premier et au second semi-conducteur de découpage T1, T2. Le module de commande 400 comporte au moins un contrôleur PWM 40, une boucle d'asservissement 41, un étage de commande 47 et une porte OU à diodes 48.

La boucle d'asservissement 41 est montée entre la première borne du condensateur tampon Ctampon et une entrée du contrôleur PWM 40.

La boucle d'asservissement 41 comprend deux étages en cascade : un étage de régulation 42 qui a une entrée reliée à la première borne du condensateur tampon Ctampon et une sortie reliée à une entrée d'un étage d'isolation galvanique 43, cet étage d'isolation galvanique ayant une sortie reliée à une entrée du contrôleur PWM 40. Ces deux étages 42, 43 sont, par exemple, des circuits préconisés par les constructeurs du contrôleur PWM 40.

L'étage de régulation 42 peut être, par exemple, un correcteur PI (pour proportionnel intégral) ou un correcteur PID (pour proportionnel intégral et dérivé).

L'étage d'isolation galvanique 43 peut être, par exemple, un optocoupleur. Il permet le transfert de signaux entre deux parties de circuits électroniques isolées électriquement l'une de l'autre.

La porte OU 48 à diodes comporte deux diodes D6 et D7. Elle possède deux entrées, l'une reliée au premier semi-conducteur de découpage T1 et l'autre au second semi-conducteur de découpage T2 et une sortie reliée en entrée du contrôleur PWM 40. Plus particulièrement, la première diode D6 de la porte OU 48 a son anode branchée en un point commun au premier semi-conducteur de découpage T1 et au premier module de mesure de courant Rsense 1. La seconde diode D7 de la porte OU 48 a son anode branchée en un point commun au second semi-conducteur de découpage T2 et au second module de mesure de courant Rsense 2. Les anodes des deux diodes D6, D7 constituent les deux entrées de la porte OU. Les cathodes des deux diodes D6, D7 sont reliées entre elles et constituent la sortie de la porte OU 48. La sortie de la porte OU 48 à diodes est reliée à une seconde entrée du contrôleur PWM 40. La porte OU à diodes délivre un courant Isense qui correspond soit au courant circulant dans le premier enroulement L1, soit au courant circulant dans le quatrième enroulement L4.

Le contrôleur PWM 40 délivre en sortie un signal PWM qui est injecté en entrée de l'étage de commande 47. L'étage de commande 47 comporte : deux portes ET 44, 45 et un inverseur 46.

Chacune des portes ET 44, 45 a une entrée reliée à la sortie du contrôleur PWM 40. L'autre entrée de la première porte ET 44 reçoit le signal A traduisant le bon fonctionnement du réseau RE. La sortie de la première porte ET 44 est reliée au premier semi-conducteur de découpage T1. Ce dernier peut prendre un état ouvert ou un état fermé en fonction d'un signal de commande PWM1 délivré par la première porte ET 44. Les sorties des portes ET 44 et 45 forment également les sorties du module de commande 400.

L'inverseur 46 reçoit le signal A en entrée et délivre le signal complémentaire A. Ce signal complémentaire A est appliqué pour commander la seconde cellule d'interruption S2. Il traduit un mauvais fonctionnement du réseau, une microcoupure ou une tension Vin inférieure au seuil.

L'autre entrée de la seconde porte ET 45 reçoit le signal complémentaire A, elle est reliée à la sortie de l'inverseur 46. La sortie de la seconde porte ET 45 est reliée au second semi-conducteur de découpage T2. Ce dernier peut prendre un état ouvert ou un état fermé en fonction d'un signal de commande PWM2 délivré par la seconde porte ET 45.

Ce dispositif interface peut être utilisé dans deux modes de fonctionnement différents :
- un premier mode de fonctionnement ou phase de charge, qui permet de charger la réserve d'énergie Cres et de fournir à partir du réseau RE la puissance de sortie.
- un second mode de fonctionnement ou phase de décharge, qui permet de fournir la puissance de sortie à partir de la réserve d'énergie Cres.

### Premier mode de fonctionnement : fonctionnement nominal

Dans le premier mode de fonctionnement, on considère que la tension du réseau Vin est dans sa plage de fonctionnement nominal. Le réseau RE fonctionne normalement. Le signal A est donc activé, ce qui a pour effet de :
- générer le signal PWM1 en sortie du module de commande 400 et donc fermer le premier semi-conducteur de découpage T1,
- ouvrir le second semi-conducteur de découpage T2,
- fermer la première cellule d'interruption S1,
- ouvrir la seconde cellule d'interruption S2.

Dans ce mode de fonctionnement, on retrouve un convertisseur « flyback » standard avec deux enroulements secondaires, à savoir les second et quatrième enroulements L2 et L4 :
- le second enroulement L2 pour alimenter les convertisseurs de sortie C1 à CN et donc fournir les tensions de sortie Vout1 à VoutN,
- le quatrième enroulement L4 pour charger la réserve d'énergie Cres,
- le troisième enroulement L3 est considéré comme déconnecté car la seconde cellule d'interruption S2 est ouverte.

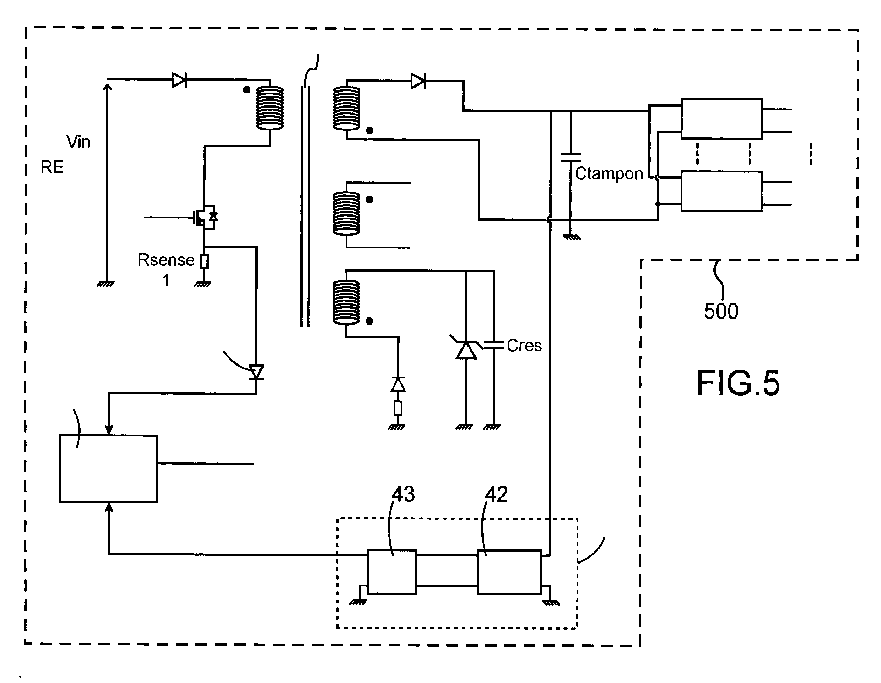

On peut simplifier le schéma de la figure 4 comme sur le schéma de la figure 5.

La régulation du convertisseur « flyback » est effectuée sur la tension Vtampon aux bornes du condensateur tampon Vtampon afin de garantir sa précision et stabilité. La charge de la réserve d'énergie Cres est faite par cross-régulation. Cela signifie que l'une des sorties du convertisseur d'entrée CE, peut être asservie par le module de commande 400, l'autre sortie sera régulée au fonctionnement intrinsèque des enroulements magnétiques couplés disposés autour du même noyau No.

On utilise donc la diode Zener D4 afin de limiter les surtensions aux bornes de la réserve d'énergie Cres en cas de saut de charge sur la tension de sortie.

### Second mode de fonctionnement : fonctionnement en mode transparence

Dans le second mode de fonctionnement, on considère que la tension réseau Vin est en dehors de sa plage de fonctionnement nominal. Le signal A traduisant le bon fonctionnement du réseau RE est donc désactivé ce qui à pour effet de :
- générer le signal PWM2 en sortie du module de commande 400 et donc fermer le second semi-conducteur de découpage T2,
- ouvrir le premier semi-conducteur de découpage T1,
- fermer la seconde cellule d'interruption S2,
- ouvrir la première cellule d'interruption S1.

Dans ce mode de fonctionnement on change le fonctionnement du convertisseur « flyback ». On utilise la réserve d'énergie Cres comme source d'énergie pour alimenter les convertisseurs de sortie C1 à CN au lieu du réseau RE. Il n'y a qu'un seul enroulement secondaire utile, à savoir le troisième enroulement L3 :
- ce troisième enroulement L3 permettant de fournir la tension Vtampon en entrée des convertisseurs de sortie C1 à CN.
- le second enroulement L2 étant considéré comme déconnecté, car la première cellule d'interruption S1 est ouverte.
- le premier enroulement L1 étant considéré comme déconnecté, car la première cellule de découpage T1 est ouverte.

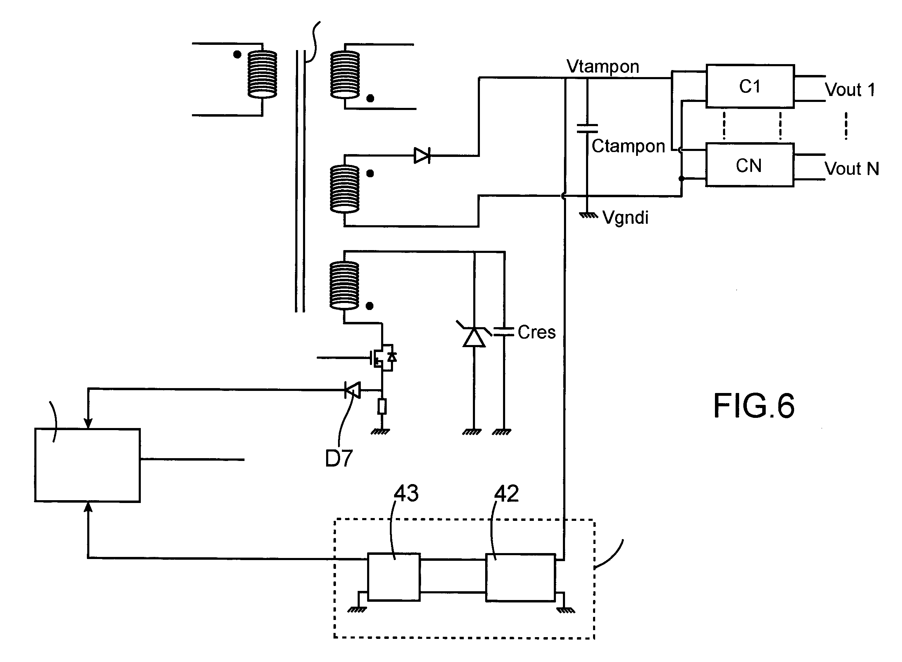

On peut donc simplifier le schéma de la figure 4 comme sur le schéma de la figure 6.

La régulation du convertisseur « flyback » est toujours effectuée sur la tension Vtampon aux bornes du condensateur tampon Ctampon.

### Phase de transition entre ces deux modes de fonctionnement :

La stabilité de la tension en entrée des convertisseurs de sortie C1 à CN est garantie grâce à la présence du condensateur tampon Ctampon. Il a pour fonction de :
- garantir une ondulation résiduelle sur la tension en entrée des convertisseurs de sortie C1 à CN en fonctionnement nominal et
- garantir une tolérance sur la tension en entrée des convertisseurs de sortie C1 à CN pendant la phase de transition entre les deux modes.

Le dispositif interface de l'invention a plusieurs variantes possibles :
- effectuer un redressement synchrone sur la tension d'entrée des convertisseurs de sortie, s'il y a des forts courants. Dans ce cas, il est intéressant de synchroniser le redressement synchrone sur le second module anti-retour D2 et sur le second semi-conducteur de découpage T2 afin d'améliorer la cross-régulation.
- supprimer la première cellule d'interruption S1 car le second module anti-retour D2 est spontanément bloqué pendant la phase où la première cellule d'interruption S1 est ouverte.

La présente invention concerne également un aéronef qui comporte au moins un dispositif interface selon l'invention. L'aéronef est schématisé sur la figure 5 avec la référence 500.

Les avantages de l'invention sont les suivants :
- Un seul élément magnétique est nécessaire pour gérer les deux fonctionnalités : isolation galvanique et réserve d'énergie, ce qui entraine gain de place, gain de masse et coût moins élevé.
- Un seul contrôleur PWM et une seule boucle d'asservissement sont nécessaires, ce qui entraine simplicité de mise en oeuvre et gain de place.
- Une optimisation de la tension aux bornes de la réserve d'énergie et du volume capacitif est possible.
- Les semi-conducteurs de découpage ne doivent être dimensionnés que pour un fonctionnement transitoire : temps de charge de la réserve d'énergie et durée des microcoupures.
- Les cellules d'interruption ne nécessitent pas d'être performantes en dynamique, la résistance Rdson (ou résistance drain-source lorsque le composant MOSFET est passant) et la tension drain-source Vds (Vds=Rdsonxlds) avec lds courant drain-source sont les seuls facteurs dimensionnants.
- La tension d'entrée des convertisseurs de sortie est régulée et permet d'optimiser le fonctionnement des N convertisseurs de sortie.

## Revendications

1. Dispositif interface entre un réseau électrique (RE) continu ou alternatif redressé et des systèmes consommateurs d'énergie, comportant un convertisseur d'entrée (CE) continu-continu à relier en entrée du réseau (RE) et plusieurs convertisseurs de sortie continu-continu (C1 à CN) à relier en sortie aux systèmes consommateurs d'énergie, **caractérisé en ce que** le convertisseur d'entrée (CE) comporte plusieurs enroulements magnétiquement couplés, disposés autour d'un même noyau magnétique (No) parmi lesquels :
- un premier enroulement (L1) connecté en un ensemble série d'un côté avec un module anti-retour (D1) et de l'autre avec un premier semi-conducteur de découpage (T1), l'ensemble série ayant deux extrémités à connecter au réseau (RE);
- un second et un troisième enroulement (L2 et L3) ayant chacun une première extrémité reliée à une première entrée des convertisseurs de sortie (C1...CN) au travers respectivement d'un premier et d'un second module anti-retour (D2, D3), et une seconde extrémité reliée à une seconde entrée des convertisseurs de sortie (C1 à CN), au travers pour le troisième enroulement (L3), d'une cellule d'interruption (S2), cette cellule (S2) étant commandée par un signal (A) complémentaire à un signal (A) traduisant un bon fonctionnement du réseau (RE);
- un quatrième enroulement (L4) ayant une extrémité à relier au réseau (RE) au travers d'un second semi-conducteur de découpage (T2) ;
et **en ce que** le dispositif interface comporte, en outre :
- un condensateur tampon (Ctampon) ayant une première extrémité reliée aux premières entrées des convertisseurs de sortie (C1 à CN) et une seconde extrémité portée à une tension de référence (Vgndi) isolée du réseau (RE);
- une réserve d'énergie (Cres) ayant une extrémité à relier au réseau (RE) et une seconde extrémité reliée à l'autre extrémité du quatrième enroulement (L4);
et **en ce que** le convertisseur d'entrée (CE) comporte en outre :
- un module de commande (400) relié en entrée à la première extrémité du condensateur tampon (Ctampon) et en sortie au premier et au second semi-conducteur de découpage (T1 et T2) de manière à les piloter, ce module de commande (400) assurant une isolation galvanique des convertisseurs de sortie (C1 à CN) vis-à-vis du réseau (RE).

2. Dispositif selon la revendication 1, dans lequel le convertisseur d'entrée comprend une autre cellule d'interruption (S1) montée entre la seconde extrémité du second enroulement (L2) et les secondes entrées des convertisseurs de sortie (C1 à CN) et pilotée par le signal traduisant le bon fonctionnement du réseau (A).

3. Dispositif selon l'une des revendications 1 ou 2 dans lequel, chaque semi-conducteur de découpage (T1 et T2) et chaque cellule d'interruption (S1 et S2) comprennent un composant MOSFET.

4. Dispositif selon la revendication 2 dans lequel le module de commande (400) comporte : une boucle d'asservissement (41), un contrôleur PWM (40), un étage de commande (47), une porte OU à diodes (48), la boucle d'asservissement (41) étant montée entre la première borne du condensateur tampon (Ctampon) et une entrée du contrôleur PWM (40), une sortie du contrôleur PWM (40) étant reliée en entrée de l'étage de commande (47) recevant également en entrée le signal (A) traduisant le bon fonctionnement du réseau, cet étage de commande (47) étant relié en sortie aux premier et second semi-conducteurs de découpage (T1, T2), la porte OU à diodes (48) ayant une première entrée reliée à au premier semi-conducteur de découpage (T1), une seconde entrée reliée au second semi-conducteur de découpage (T2) et une sortie reliée à une autre entrée du contrôleur PWM (40).

5. Dispositif selon la revendication 4, dans lequel la boucle d'asservissement (41) comporte en cascade un étage de régulation (42) et un étage d'isolation galvanique (43), l'étage de régulation (42) étant relié au condensateur tampon (Ctampon) et l'étage d'isolation galvanique (43) étant relié au contrôleur PWM (40).

6. Dispositif selon la revendication 2, dans lequel l'étage de commande (47) comporte
- deux portes ET (44 et 45) recevant respectivement le signal (A) traduisant le bon fonctionnement du réseau et son signal complémentaire (A) et un signal PWM délivré par le contrôleur PWM (40), le signal complémentaire (A) étant délivré en sortie d'un inverseur (46) recevant en entrée le signal (A) traduisant le bon fonctionnement du réseau.

7. Dispositif selon l'une des revendications 1 à 6, dans lequel le convertisseur d'entrée (CE) comporte, en outre, un premier module de mesure de courant (Rsense 1) monté entre le premier semi-conducteur de découpage (T1) et le réseau (RE) et un second module de mesure de courant (Rsense 2) monté entre le second semi-conducteur de découpage (T2) et le réseau (RE).

8. Dispositif selon l'une des revendications 1 à 7, dans lequel le convertisseur d'entrée (CE) est un convertisseur « flyback ».

9. Dispositif selon l'une des revendications 1 à 8, dans lequel la réserve d'énergie comprend au moins un condensateur (Cres).

10. Dispositif selon l'une des revendications 1 à 9, dans lequel une diode Zener est disposée aux bornes de la réserve d'énergie (Cres) pour la protéger.

11. Dispositif selon l'une des revendications 1 à 10, dans lequel le premier module anti-retour (D1) comporte une diode, ou bien un module de commande associé à un ou plusieurs transistors, un interrupteur, un relais mécanique ou tout autre élément interrupteur unidirectionnel en courant.

12. Aéronef comprenant au moins un dispositif selon l'une quelconque des revendications précédentes.

## Patentansprüche

1. Schnittstellenvorrichtung zwischen einem Gleichspannungs- oder gleichgerichteten Wechselspannungsnetz (RE) und Energieverbrauchersystemen, die einen am Eingang des Netzes (RE) anzuschließenden DC-DC-Eingangswandler (CE) und mehrere, am Ausgang an die Energieverbrauchersysteme anzuschließende DC-DC-Ausgangswandler (C1 bis CN) aufweist, **dadurch gekennzeichnet,**
**dass** der Eingangswandler (CE) mehrere gekoppelte Magnetspulen aufweist, die um den gleichen Magnetkern (No) angeordnet sind, von denen:
- eine erste Spule (L1) in einer Reihenschaltung einerseits mit einem unidirektionalen Sperrmodul (D1) und andererseits mit einem ersten Unterbrechungshalbleiter (T1) verbunden ist, wobei die Reihenschaltung zwei mit dem Netz (RE) zu verbindende Enden aufweist;
- eine zweite und eine dritte Spule (L2 und L3) jeweils ein erstes Ende aufweisen, das über ein erstes bzw. ein zweites unidirektionales Sperrmodul (D2, D3) mit einem ersten Eingang der Ausgangswandler (C1 ... CN) verbunden ist, und ein zweites Ende aufweisen, das mit einem zweiten Eingang der Ausgangswandler (C1 bis CN) verbunden ist, für die dritte Spule (L3) über eine Unterbrechungszelle (S2), wobei diese Zelle (S2) durch ein Signal (A̅) gesteuert wird, das komplementär zu einem Signal (A) ist, das ein gutes Funktionieren des Netzes (RE) angibt;
- eine vierte Spule (L4) ein Ende aufweist, das über einen zweiten Unterbrechungshalbleiter (T2) mit dem Netz (RE) zu verbinden ist;
**dass** die Schnittstellenvorrichtung ferner aufweist:
- einen Pufferkondensator (Ctampon) mit einem ersten Ende, das mit den ersten Eingängen der Ausgangswandler (C1 bis CN) verbunden ist, und einem zweiten Ende, an dem eine vom Netz (RE) isolierte Bezugsspannung (Vgndi) angelegt ist;
- eine Energiereserve (Cres) mit einem mit dem Netz (RE) zu verbindenden Ende und einem zweiten Ende, das mit dem anderen Ende der vierten Spule (L4) verbunden ist;
und **dass** der Eingangswandler (CE) ferner aufweist:
- ein Steuermodul (400), das am Eingang mit dem ersten Ende des Pufferkondensators (Ctampon) verbunden ist und am Ausgang mit dem ersten oder dem zweiten Unterbrechungshalbleiter (T1 und T2) zur Steuerung derselben verbunden ist, wobei dieses Steuermodul (400) eine galvanische Isolierung der Ausgangswandler (C1 bis CN) gegenüber dem Netz (RE) gewährleistet.

2. Vorrichtung nach Anspruch 1, wobei der Eingangswandler eine weitere Unterbrechungszelle S1 aufweist, die zwischen dem zweiten Ende der zweiten Spule (L2) und den zweiten Eingängen der Ausgangswandler (C1 bis CN) angebracht ist und durch das Signal (A), das das gute Funktionieren des Netzes angibt, gesteuert wird.

3. Vorrichtung nach einem der Ansprüche 1 oder 2, wobei jeder Unterbrechungshalbleiter (T1 und T2) und jede Unterbrechungszelle (S1 und S2) eine MOSFET-Komponente aufweist.

4. Vorrichtung nach Anspruch 2, wobei das Steuermodul (400) eine Steuergerätschleife (41), einen PWM-Kontroller (40), eine Steuerstufe (47) und ein OR-Gate mit Dioden (48) aufweist, wobei die Steuergerätschleife (41) zwischen der ersten Klemme des Pufferkondensators (Ctampon) und einem Eingang des PWM-Kontrollers (40) angebracht ist, ein Ausgang des PWM-Kontrollers (40) am Eingang der Steuerstufe (47) angeschlossen ist, die am Eingang ebenfalls das Signal (A) empfängt, das das gute Funktionieren des Netzes anzeigt, wobei diese Steuerstufe (47) am Ausgang mit dem ersten und dem zweiten Unterbrechungshalbleiter (T1, T2) verbunden ist, das OR-Gate mit Dioden (48) einen ersten Eingang, der mit dem ersten Unterbrechungshalbleiter (T1) verbunden ist, einen zweiten Eingang, der mit dem zweiten Unterbrechungshalbleiter (T2) verbunden ist, und einen Ausgang, der mit dem anderen Eingang des PWM-Kontrollers (40) verbunden ist, aufweist.

5. Vorrichtung nach Anspruch 4, wobei die Steuergerätschleife 41 aufeinanderfolgend eine Regelstufe (42) und eine galvanische Isolierungsstufe (43) aufweist, wobei die Regelstufe (42) mit dem Pufferkondensator (Ctampon) verbunden ist und die galvanische Isolierungsstufe (43) mit dem PWM-Kontroller (40) verbunden ist.

6. Vorrichtung nach Anspruch 2, wobei die Steuerstufe (47) zwei AND-Gates (44 und 45) aufweist, die das Signal (A), das das gute Funktionieren des Netzes angibt, bzw. dessen komplementäres Signal (A̅) und ein PWM-Signal, das durch den PWM-Kontroller (40) geliefert wird, empfangen, wobei das komplementäre Signal (A̅) am Ausgang eines Inverters (46), der am Eingang das Signal (A), das das gute Funktionieren des Netzes angibt, empfängt, geliefert wird.

7. Vorrichtung nach einem der Ansprüche 1 bis 6, wobei der Eingangswandler (CE) ferner ein erstes Strommessmodul (Rsense 1), das zwischen dem ersten Unterbrechungshalbleiter (T1) und dem Netz (RE) angebracht ist, und ein zweites Strommessmodul (Rsense 2), das zwischen dem zweiten Unterbrechungshalbleiter (T2) und dem Netz (RE) angebracht ist, umfasst.

8. Vorrichtung nach einem der Ansprüche 1 bis 7, wobei der Eingangswandler (CE) ein "Flyback"-Wandler ist.

9. Vorrichtung nach einem der Ansprüche 1 bis 8, wobei die Energiereserve mindestens einen Kondensator (Cres) umfasst.

10. Vorrichtung nach einem der Ansprüche 1 bis 9, wobei eine Zener-Diode an den Klemmen der Energiereserve (Cres) zum Schützen derselben angeordnet ist.

11. Vorrichtung nach einem der Ansprüche 1 bis 10, wobei das erste unidirektionale Sperrmodul (D1) eine Diode oder auch ein Steuermodul, das mit einem oder mehreren Transistoren verbunden ist, einen Unterbrecherschalter, ein mechanisches Relais oder jedes andere, in Bezug auf den Strom unidirektionale Unterbrecherschaltelement aufweist.

12. Luftfahrzeug, das mindestens eine Vorrichtung nach einem der vorhergehenden Ansprüche aufweist.

## Claims

1. An interface device between a direct or rectified alternating current electrical network (RE) and energy consumer systems, including a DC-DC input converter (CE) which is to be connected at input to the network (RE), and several DC-DC output converters (C1 to CN) to be connected at output to the energy consumer systems, **characterized in that** the input converter (CE) includes several magnetically coupled windings, positioned around the same magnetic core (No), among which:
- a first winding (L1) connected to a serial assembly on one side, with a reverse blocking module (D1), and on the other with a first semiconductor chopper device (T1), wherein the series assembly has two ends which are to be connected to the network (RE);
- a second and a third windings (L2 and L3), each having a first end connected to a first end of the output converters (C1...CN) through, respectively, a first and a second reverse blocking modules (D2, D3), and a second end connected to a second input of the output converters (C1 to CN) through, in the case of the third winding (L3), a switching cell (S2), wherein this cell (52) is controlled by a signal (A) which is complementary to a signal (A) signalling that the network (RE) is operating correctly;
- a fourth winding (L4) having an end which is to be connected to the network (RE), through a second semiconductor chopper device (T2);
and **in that** the interface device also includes:
- a buffer capacitor (Ctampon) having a first end connected to the first inputs of the output converters (C1 to CN), and a second end, to which a reference voltage (Vgndi) is applied, isolated from the network (RE);
- a power reserve (Cres) having an end which is to be connected to the network (RE) and a second end connected to the other end of the fourth winding (L4);
and **in that** the input converter (CE) also includes:
- a control module (400) connected at its input to the first end of the buffer capacitor (Ctampon), and at its output to the first and to the second semiconductor chopper devices (T1 and T2) in order to control them, wherein this control module (400) provides galvanic isolation of the output converters (C1 to CN) with regard to the network (RE).

2. A device according to claim 1, wherein the input converter includes another switching cell (S1) installed between the second end of the second winding (L2) and the second inputs of the output converters (C1 to CN), and controlled by the signal (A) signalling that the network is operating correctly.

3. A device according to one of the claims 1 or 2, wherein each semiconductor chopper device (T1 and T2) and each switching cell (S1 and S2) includes a MOSFET component.

4. A device according to claim 2, wherein the control module (400) includes: a feedback loop (41), a PWM controller (40), a control stage (47) and a diode OR gate (48), wherein the feedback loop (41) is installed between the first terminal of the buffer capacitor (Ctampon) and an input of the PWM controller (40), wherein an output of the PWM controller (40) is connected at input of the control stage (47), also receiving at its input the signal (A) signalling that the network is operating correctly, wherein this control stage (47) is connected at output to the first and second semiconductor chopper devices (T1, T2), and wherein the diode OR gate (48) has a first input connected to the first semiconductor chopper device (T1), a second input connected to the second semiconductor chopper device (T2), and an output connected to another input of the PWM controller (40).

5. A device according to claim 4, wherein the feedback loop (41) includes, in cascading fashion, a regulator stage (42) and a galvanic isolation stage (43), wherein the regulator stage (42) is connected to the buffer capacitor (Ctampon) and the galvanic isolation stage (43) is connected to the PWM controller (40).

6. A device according to claim 2, wherein the control stage (47) includes
- two AND gates (44 and 45), receiving respectively the signal (A) signalling that the network is operating correctly, and its complementary signal (A̅), and a PWM signal delivered by the PWM controller (40), wherein the complementary signal (A̅) is delivered at the output of an inverter (46) receiving at input the signal (A) signalling that the network is operating correctly.

7. A device according to any one of claims 1 to 6, wherein the input converter (CE) includes, in addition, a first current measurement module (Rsense 1) installed between the first semiconductor chopper device (T1) and the network (RE) and a second current measurement module (Rsense 2) installed between the second semiconductor chopper device (T2) and the network (RE).

8. A device according to any one of claims 1 to 7, wherein the input converter (CE) is a "flyback" converter.

9. A device according to any one of claims 1 to 8, wherein the power reserve includes at least one capacitor (Cres).

10. A device according to any one of claims 1 to 9, wherein a Zener diode is positioned at the terminals of the power reserve (Cres) to protect it.

11. A device according to any one of claims 1 to 10, wherein the first reverse blocking module (D1) includes a diode, or again a control module associated with one or more transistors, a switch, a mechanical relay or any other current unidirectional switch element.

12. An aircraft including at least one device according to any one of the preceding claims.
